# EUROPEAN PATENT APPLICATION

(11) **EP 2 189 205 A1**
(43) Date of publication of application: **26.05.2010**
(21) Application number: 09176868.9
(22) Date of filing: 24.11.2009
(51) Int. Cl.: B01D 33/09

(54) **Lime mud vacuum filter washing system and method**

(30) Priority: 24.11.2008 US 117324 P; 20.11.2009 US 622734
(71) Applicant: Andritz, Inc., Glens Falls, NY 12801 (US)
(72) Inventor: Andersson, Christer, Canton, GA 30115 (US); Peltonen, Kimmo, Alpharetta, GA 30005 (US); Hendrix, Steve, Cumming, GA 30040 (US)
(74) Representative: Spilgies, Jan-Hendrik

(57) **Abstract**

A method to clean a drum of a vacuum dryer including: rotating the drum about an axis in a first direction to form the cake of material on the drum as it moves through a vat of the material, wherein an outer layer of the cake is a precoat layer formed from the material in the vat; drawing filtrate through the cake and filter on the drum to a network of conduits in the drum, wherein the precoat layer thickens as the filtrate is removed: mechanically scraping at least a portion of the precoat layer from the cake; discharging a wash liquid from a row of nozzles of a wash structure, wherein the wash liquid is discharged in a sequence in which one of the nozzles in the row discharges the wash liquid while other nozzles in the row are not applying the wash liquid to the drum.

## Description

### RELATED APPLICATION

This application claims priority to U.S. Provisional Patent Application Serial Number 61/117,324, filed November 24, 2008, the entirety of which is incorporated by reference.

### BACKGROUND OF THE INVENTION

The present invention relates generally to washing the drums of large vacuum dryers and, particularly to washing fine particles from the drum and washing the filter of the drum in lime mud vacuum drum dryers.

A vacuum drum dryer removes water and thickens lime mud which is typically further processed by a lime kiln. In the dryer, lime mud having a dry-solids content of approximately 25% (percent) is thickened to a dry-solids content of 70 to 85%. The lime mud is applied to a filter drum of the vacuum dryer. A cake of lime mud builds up on the outer surface of the filter drum to a thickness of 35 millimeters (mm) to 15 mm. A precoat layer of lime mud forms as the outside layer of the lime cake. The thickness of the precoat layer is normally between 3 mm to 1 mm. A lower portion of the drum rotates through a vat of lime mud. As the filter drum rotates above the vat, filtrate liquid is drawn from the cake and through the filter by a vacuum system. The removal of filtrate dries and thickens the lime mud in the precoat layer on the drum. At the end of drying portion of the drum rotation, a scraper removes an outer layer, e.g., about 1 mm, of the dried lime mud from the surface of the precoat filter layer. The dried lime mud falls from the scraper to a conveyor and moves to a kiln.

The portion of the precoat filter layer that is not scrapped off can become clogged with fine particles of lime. A clogged precoat layer creates excessive resistance to the filtrate flow through the lime cake as the drum rotates through the vat. To avoid clogging, the precoat layer is periodically removed by a wash spray and the precoat layer reforms on the lime cake. In addition, the drum filter may become clogged with lime particles. The drum filter is periodically cleaned by high pressure water jets that cut away the cake and clean the filter. The cake reforms on the filter as the drum rotates through the vat.

Exemplary washing systems for time mud dyers are disclosed in U.S. Patent 5,759,397; 5,897,788 and U.S. Patent Application Publication No. 2007/0251891. These conventional washing systems use high pressure jets and medium pressure sprays to apply wash liquid to the lime cake and drum filter. The high pressure jets remove the cake and wash the filter exposed by the removal of the cake. The medium pressure sprays remove the precoat layer, but not the entire lime cake. The medium pressure sprays are used while the high pressure jets are turned off, and may be applied with the high pressure jets to avoid loss of suction pressure due to the removal of the lime cake. See, U.S. Pat. 5,897,788, col. 4, Ins. 8 to 56.

These exemplary washing system do not allow the scraping removal of lime while the high pressure jets remove the lime cake and clean the drum filter. The cake is removed and the filter is cleaned periodically, such as once every four (4) to eight (8) hours of vacuum drum dryer operation. While the cake is being removed and the filter cleaned, the upper portion of the precoat layer is not simultaneously being scraped and discharged from the drum. Suspending the scraping of the precoat layer interrupts the production of thickened lime mud from the vacuum drum dryer. There is a long felt need for techniques to clean the drum filter that do not interrupt the dryer.

### BRIEF DESCRIPTION OF THE INVENTION

A washing system has been developed for a filter in a lime mud vacuum dryer. The washing system includes spray nozzles that wash the lime mud filter cake and filter in the vacuum dryer. The spray nozzles are arranged in a row(s) across the width of the cylindrical dryer drum. The nozzles in each row are independently and sequentially supplied with wash liquid, e.g., water, through stainless steel conduit tubing. Water or another washing liquid are applied sequentially to the spray nozzles such that only one or two nozzles project liquid at any one time. The nozzles move back and forth over a short section of the width of the drum in an oscillating movement as wash liquid is applied to a narrow annual ring region of the drum. After the selected nozzle(s) has applied wash liquid to its annular ring region on the drum, another nozzle(s) is selected and applies wash liquid to another annular ring region of the drum. The selection of nozzle(s) proceeds sequentially such that over time the entire width of the drum receives a spray from one of the nozzle(s).

Conduits, such as tubing, providing wash liquid to the nozzles are contained in a stainless steel beam arranged adjacent the vacuum drum. The nozzles may be attached to the beam and positioned to project wash liquid on the lime cake supported by the filter and drum. The beam moves back and forth to direct wash spray from the selected nozzle(s) over an annular ring region on the lime cake. The beam is moved back and forth by a motor and gears mounted to the end of the beam. The ends of the beam are supported by rollers or other bearing structures that allow the beam to move back and forth. The rollers or bearing may be enclosed by a rubber boot seal to be shielded from lime mud dust.

Water is supplied to the conduits in the beam by a high pressure pump that preferably operates at a variable speed and output pressure. Some of the conduits provide high pressure wash liquid to jet nozzles arranged along the length of the beam. Other conduits provide medium pressure wash liquid to fan nozzles also arranged along the length of the beam. Solenoid valves direct water from the pump at the medium or high pressures needed for the fan and jet nozzles.

A flow control device, e.g., solenoid valves, preferably positioned outside of the drum direct wash liquid to selected nozzle(s). The solenoid valves distribute the wash liquid sequentially to the nozzle(s). The operation of the solenoid valves is controlled by a flow control algorithm that may be executed by a central distributed control system (DCS), a local program logic circuit (PLC) or other computer processor or electronic circuit control system.

The invention may be embodied as a method of cleaning a drum of a vacuum dryer, wherein the drum has a circumferential surface including a filter covered by a cake of a material to be dried and a network of conduits which receive filtrate passing through the cake and filter, a vat of the material in which the drum is partially seated, a mechanical scraper adjacent a first side of the drum and a wash structure including at least one row of nozzles adjacent a second side of the drum, the method comprising: rotating the drum about an axis in a first direction to form the cake of the material on the circumferential surface as the drum moves through the vat, wherein an outer layer of the cake is a precoat layer formed from the material in the vat; drawing filtrate through the cake and filter and into the network of conduits, wherein the precoat layer thickens as the filtrate is removed; mechanically scraping at least a portion of the precoat layer from the cake by the scraper, wherein the first side of the drum rotates down towards the vat; and discharging a wash liquid from a row of nozzles of the wash structure to the second side of the drum, wherein the wash liquid is discharged in a sequence in which one of the nozzles in the row is discharging the wash liquid while other nozzles in the row are not applying the wash liquid to the drum.

A vacuum dryer comprising: a rotable drum including a circumferential surface covered by a filter and a cake of a material to be dried; a network of conduits which receive filtrate passing through the cake and filter; a vat of the material in which the drum is partially seated; a mechanical scraper adjacent a first side of the drum, and a wash structure including nozzles adjacent a second side of the drum and the nozzles are arranged laterally across the surface of the drum; and a controller actuating at least one valve to select one or more of the nozzles to discharge a fluid against cake while the scraper removes an outer layer of the cake.

### BRIEF DESCRIPTION OF THE DRAWINGS

FIGURE 1 is schematic diagram showing in cross-section a lime mud vacuum drum dryer.

FIGURE 2 is a schematic diagram showing a wash system for directing high pressure water jets and medium pressure water sprays to the lime cake and drum filter in the lime mud vacuum dryer.

FIGURE 3 is a perspective view of a front side of an exemplary motor and gearing assembly attached to a reciprocating beam supporting nozzles for the wash system.

FIGURE 4 is an end view of the beam with the motor and gear assembly shown in Figure 3.

FIGURE 5 is a perspective view of a rear side of the motor and gearing assembly and the reciprocating beam shown in Figure 3.

FIGURE 6 is perspective view of another embodiment of the wash system which includes a rotating valve for sequentially directing high pressure and medium pressure wash liquid from nozzles aimed at the lime cake.

FIGURE 7 is a perspective view of rotating and stationary components of the regulator valve shown in Figure 6 which sequentially direct wash liquid to each of the wash nozzles.

FIGURE 8 is a schematic diagram of another alternative wash system embodiment for applying high pressure and medium pressure water sequentially to a row of jet nozzles and a row of fan nozzles, respectively.

### DETAILED DESCRIPTION OF THE INVENTION

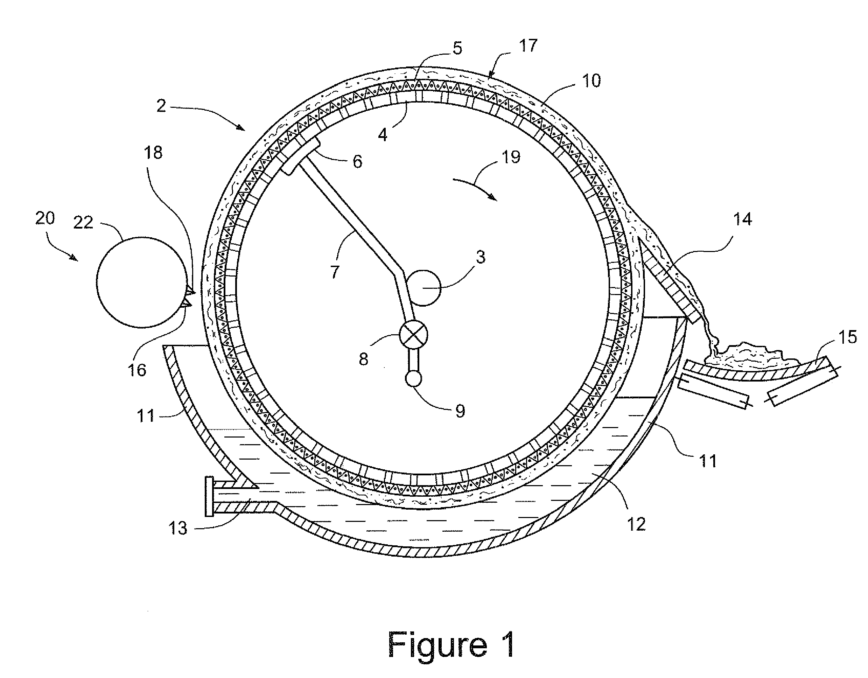

FIGURE 1 illustrates a vacuum drum system including a rotating drum 2 mounted on a shaft 3 extending through a longitudinal rotating axis of the drum. The cylindrical shell of the drum is made of a cylindrical porous frame 4, perforated plate or other support surface that forms a mesh, porous or perforated support for a filter cloth 5. The shell is covered with the filter cloth 5, such as a wire or polypropylene cloth. Immediately inside the cylindrical frame 4 are a network of filtrate drainage compartments 6 (only one of which is shown), each having a filtrate duct 7 (shown schematically in Figure 1) for directing filtrate to a filtrate discharge valve 8 at the end of the drum or to a hollow portion of the shaft 3.

Filtrate passing through the cylindrical frame 4 and into the drainage compartments 6 is discharged from the valve 8 or shaft 3 through a gravity induced discharge system or a pump 9 induced discharge system. The discharge of the filtrate creates a vacuum in the each of the drainage compartments 6. The vacuum draws liquid through the frame 4 and the filter cloth 5, while the filter cloth blocks particulates, e.g., lime particulates. Due to the blockage of the particulates, a cylindrical cake 10 of lime mud forms on the outer surface of the filter cloth. The lime cake 10 typically has a thickness of between three-quarters of an inch to one inch (15mm to 35mm).

A lower portion of the drum 2, e.g., between the 4:00 o'clock to 8:00 clock positions of the rotation of the drum, is partly immersed in a vat housing 11 containing lime mud 12. The drum rotates in a clockwise direction as indicated by the arrow 19 on the drum in Figure 1. An inlet 13 to the vat housing 11 receives a flow of lime mud preferably at a dry-solids content of 20% to 25% of lime particles to liquid. The lime mud 12 in the vat attaches to the lime cake 10 as the drum dryer rotates through the vat housing.

As the drum 2 rotates, lime mud 12 in the vat is sucked onto the lime cake by the suction applied to the filter cloth 5 and drainage compartments 6 beneath the lime cake. The partial vacuum prevailing in filtrate ducts 7 provides a pressure difference drawing the lime mud to the cake and filtrate liquid through the cake and filter. The lime mud builds-up on the lime cake as the drum rotates through the vat. As the drum rotates and thickened lime mud cake rises from the vat, the partial vacuum continues to remove liquid from the lime cake and into the drainage compartments 6. The removal of liquid from the lime cake raises the dry-solids content of the lime mud in the precoat layer 17 of the lime cake. The filtrate liquid, i.e. weak liquor, separated from the lime mud and drawn through the filter cloth and into the drainage compartments.

The outer layer of lime mud on the lime cake 10 is referred to as a precoat layer 17. The lime mud in the precoat layer 17 is thickened as water is drawn from the layer and through the underlying portion of the lime cake and filter. The precoat layer is typically 3 to 1 mm thick. The precoat layer is reformed on the lime cake as the drum rotates through the vat 11 of lime mud.

A scraper 14 removes the precoat layer 17 or a portion, e.g., 1 mm, of the precoat layer. The lime mud scraper 14 extends along the side of the lime cake 10 from one longitudinal end of the drum 2 to the other. The scraper 14 may remove a thin outer layer, e.g., one millimeter thick, from the precoat layer. The scraper guides the removed dried lime mud to a belt conveyor 15 (shown in cross-section in Fig. 1) beside the drum or a corresponding means which transports the dried lime mud to a reburning kiln.

The precoat layer 17 includes fine lime particles that can clog the pours in the filter cloth 5. A clogged filter cloth reduces the amount of suction applied to drawn liquid through the lime cake 10 and applied to drawn lime mud 12 from the vat onto the lime cake. To avoid excessive clogging of the filter cloth, annular strips the precoat layer and of the lime cake are periodically removed by spray nozzles directing wash liquid that cut into the lime cake and remove the lime mud from the cake. The removed lime mud falls into the lime mud 12 in the vat housing. The precoat layer and lime cake is reformed as the drum rotates through the vat.

The spray nozzles 16, 18 are included in a liquid wash system 20 positioned adjacent and parallel to the drum 2. The wash system includes a beam 22 or other support frame for wash nozzles. The beam extends the length of the drum and is preferably posited adjacent about the 9:00 o'clock position of the drum, and near where the drum rises from the vat. The beam 22 supports a row(s) of highpressure wash nozzles 16 that are preferably mounted on the beam to apply high pressure jets of wash liquid to the lime cake and filter. The high pressure wash nozzles may be arranged to apply jets of wash liquid generally perpendicularly to the lime cake or at an angle opposite to the rotation of the drum. The high pressure nozzles may be arranged in a single row or preferably, in two rows in which nozzles from each row are vertically aligned to form a pair of high pressure nozzles that apply simultaneous wash liquid jets to the lime cake and filter. A first jet cuts a narrow strip, e.g., 10 mm to 20 mm wide, through the lime cake to expose the filter. The second jet cleans the exposed filter.

A row of medium pressure nozzles 18 is mounted on the beam 22, and are preferably immediately above the row(s) of high pressure nozzles. Each medium pressure nozzle may be vertically aligned with a corresponding high pressure nozzle 16 or pair of nozzles. Preferably, a medium pressure nozzle sprays wash liquid on the lime cake while the high pressure nozzle (immediately below the medium pressure nozzle) sprays a high pressure jet that removes an annular strip of the lime cake and exposes the filter. The medium pressure nozzle is applied to the lime cake above the high pressure jet and causes lime mud to form the sides of the strip cut in the cake by the high pressure jets and from the adjacent precoat layer. The lime mud that fills the annular strip cut by the high pressure jet. Quickly filling the annular strip in the lime cake prevents a loss of vacuum that could otherwise result from the strip and exposed filter.

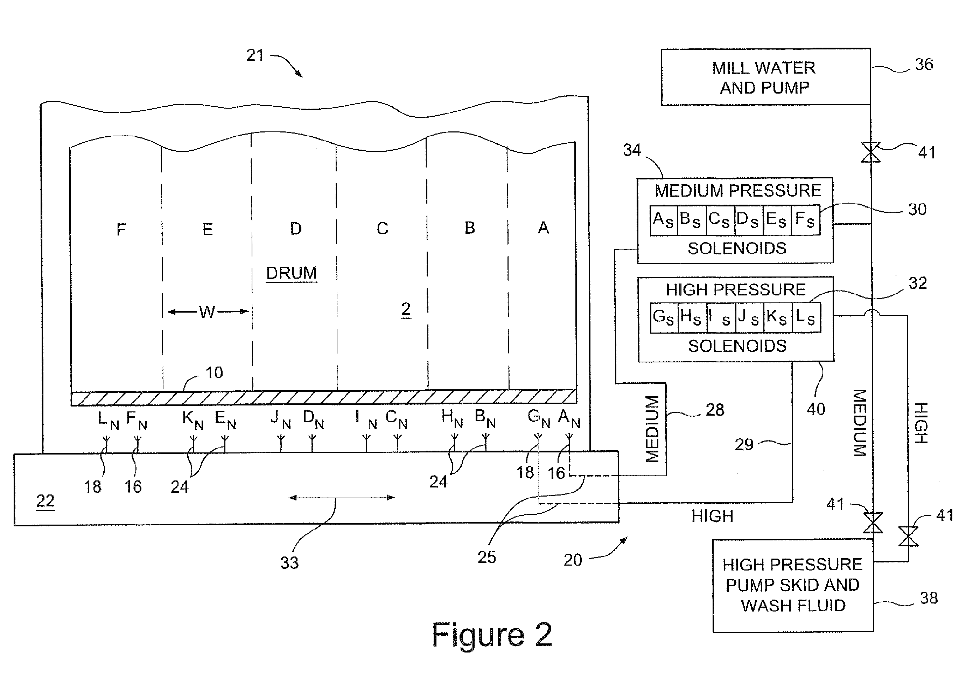

FIGURE 2 is a schematic view of the wash system 20 for the vacuum drum dryer 21. The wash system 20 provides wash liquid to nozzles 16, 18 directed at a lime cake 10 on the rotating drum 2. The wash systems 20 includes a reciprocating beam 22 or other long frame that supports the nozzles 16, 18 and piping 25 that deliver wash liquid to the nozzles. The medium pressure nozzles 18 (A_{N}, B_{N}, C_{N}, D_{N}, E_{N} and F_{N}) direct streams of medium pressure wash liquid against the lime cake and the high pressure nozzles 16 (G_{N}, H_{N}, I_{N}, J_{N}, K_{N} and L_{N}) direct streams of high pressure wash liquid against the lime cake. The piping 25 in the beam 22 is shown by dotted lines in Figure 2 which is representative of pipes or tubes mounted on the beam and extending to each nozzle 16, 18 from a respective pipe 28, 29 extending from a respective one of a medium pressure valve solenoid 30 or a high pressure valve solenoid 32. The beam 22 is parallel and proximate to the drum. The beam may position the nozzles 16, 18 such that nozzles are close to the drum, such as within one to two inches (50 mm to 2 mm) of the drum.

The beam 22 moves reciprocally 33, e.g., back and forth twenty-four inches (0.6 meters), to move the nozzles 16, 18 in a back and forth, e.g., oscillating, movement across the face of the lime cake and drum. The distance that each nozzle moves back and forth is preferably equal to the distance between a similar type nozzle. For example, the distance of the back and forth movement of the beam 22 is about two (2) feet (0.6 meter). Similarly, the distance between the medium pressure nozzles is about two (2) feet (0.6 m), as is the distance between the high pressure nozzles. Moreover, the distance between the similar type nozzles may be an inch or two (about 25 to 50 mm) less than the distance of the back and forth reciprocating movement of the beam.

The back and forth movement 33 of the beam 22 moves the nozzles 16, 18 across an annular portion of the drum. As shown in Figure 2, the drum is divided (for purposes of illustration and not literally) into longitudinal annular ring sections (A, B, C, D, E and F) of the drum. The annular ring sections have a width corresponding to the back and forth movement of the nozzles. Each ring section has an associated group 24 of a medium pressure nozzle 16 and high pressure nozzles 18 arranged at a location along the length of the beam adjacent to the ring section. Each group 24 of nozzles traverses the width (w) of its corresponding ring section as the beam moves back and forth. For example, the group 24 of nozzles corresponding to ring section F on the drum is positioned to face ring section F and traverses the width (w) of ring section F as the nozzles 16, 18, and beam 22 moves back and forth. Similarly, the group 24 of nozzles adjacent ring section E moved back and forth across the portion of the drum corresponding to ring section E; the group 24 of nozzles adjacent ring section D move back and forth across the portion of the drum corresponding to ring section D, and so on. The groups 24 of nozzles are arranged such that collectively the nozzles traverse the entire width of the lime cake 10 on the drum 2.

A group 24 of nozzles comprises, for example, a high pressure nozzle 16 (or pair of high pressure nozzles) and a medium pressure nozzle 18, wherein the nozzles 16, 18 may be aligned vertically. Figure 1 shows the medium pressure nozzle 18 above the high pressure nozzle(s) 16 for a clockwise rotating drum. The medium pressure nozzle may be below the high pressure nozzles if the drum rotation is counter-clockwise. The medium pressure nozzle 18 is preferably a spray or fan nozzle discharging a wash liquid spray at a pressure of between two (2) bar to twenty (20). The medium pressure nozzle may discharge a spray of wash liquid that impinges on a 120 mm to 250 mm width strip of the lime cake on the drum. The medium pressure fan nozzle 18 removes an annular ring section of the precoat layer but does not remove the remainder of the lime cake. Removal of the precoat layer clears the fine dust particles that buildup in the precoat layer. If not periodically cleared, these fine dust particles may render the precoat layer impervious and prevent air flow through the lime cake and into the vacuum system. The ring of the precoat layer 17 is reformed on the cake as the drum rotates through the vat 11.

The medium pressure sprays may be applied to remove the precoat layer sequentially in successive rings (A to F) while the scraper continues to remove dried portions of the precoat. The medium pressure nozzle 18 is preferably a spray or fan nozzle discharging a spray of wash liquid that impinges on a 120 mm to 250 mm width strip of the lime cake on the drum. The medium pressure nozzles 18 are preferably positioned immediately above the vat and adjacent the portion of the drum rising out of the vat. The scraper 14 is preferably positioned on the opposite side of the drum from the wash system and immediately above the vat. The precoat layer removed by the medium pressure nozzle forms a relatively narrow ring section (A to F) as a depression in the lime cake. This ring depression continues as the drum rotates to the scraper. As the drum rotates to the scraper, the precoat layer is dried.

The ring depression in the lime cake formed by the medium pressure nozzle may pass under the scraper without touching the scraper. As the depression is immersed in the vat of lime mud, the ring depression fills with lime mud and reforms the precoat layer. As the drum continues to rotate, the filled in portion of the precoat is preferably not immediately washed again with the nozzles, but is rather dried and then cut away by the scraper. The filled-in portion of the precoat is preferably not again washed until the remainder of the drum receives medium pressure sprays from the wash system.

Each group of nozzles 24 also preferably includes a pair of high pressure nozzles 18 that each discharge a stream or jet of wash liquid at a high pressure of preferably between thirty (30) bar to seventy (70) bar. The high pressure nozzles direct a narrow stream or jet of wash liquid that cuts away the lime cake entirely and exposes a narrow strip of the underlying filter. The stream or jet from the high pressure nozzle 18 also cleans the exposed filter cloth 5 (Fig. 1). Preferably, a first high pressure nozzle cuts away a narrow strip of the lime cake and the second, and a second high pressure nozzle, operating at a higher pressure, cleans the exposed filter. In addition, the medium pressure nozzle immediately above the high pressure nozzles sprays wash liquid on the exposed filter and adjacent lime cake.

Immediately after the high pressure nozzles have removed the lime mud cake and cleaned the filter cloth, the medium pressure nozzles direct a spray of wash liquid at the removed strip of cake and the adjacent portions of the cake to cause lime mud to fill the strip cut by the high pressure nozzles. Filling the strip with lime mud prevents excessive air being sucked through the strip and exposed filter and thereby prevents a loss of suction in the drum. The high pressure jets are applied less often to the drum than are applied the medium pressure sprays when applied without the high pressure jets. The scraper continues to remove an outer layer of the precoat layer while the high pressure nozzles cut away a ring of the like cake and clean the filter cloth.

Wash liquid is supplied to the nozzles 16, 18 and the tubing 25 in the beam coupled to the nozzles from pipes or other conduits 28, 29 connected to solenoid valves 30, 32. A medium pressure pipe 28 extends between each medium pressure solenoid valve (A_{S}, B_{S}, C_{S}, D_{S}, E_{S} and F_{S}) and the corresponding medium pressure tube 28 and medium pressure nozzle 16. Similarly, a high pressure pipe 29 extends between each high pressure solenoid valve (G_{S}, H_{S}, I_{S}, J_{S}, K_{S} and L_{S}) and the corresponding high pressure tube 29 and high pressure nozzles 18. The medium pressure wash liquid provided to the bank 30 of medium pressure solenoid valves may be supplied at a medium pressure of, for example, 300 pounds per square inch (psi) to 650 psi (20 bar to 45 bar). The high pressure wash liquid provided to the bank 32 of high pressure solenoid valves may be supplied at a high pressure of, for example, 800 psi to 950 psi (55 bar to 65 bar).

The medium pressure solenoid valves 30 may be arranged in a bank 34 having a common manifold receiving medium pressure liquid pumped from both a mill water source 36 and pumped from a source of wash liquid 38. Similarly, the high pressure solenoid valves 32 may be arranged in a bank 40 having a common manifold receiving high pressure liquid pumped from the wash liquid source 38. Valves 41 turn on and off the flow of wash liquid between the banks 30, 32 of solenoid valves and the sources 36, 38 of wash liquid.

For example, to provide medium pressure wash water to the medium pressure solenoids 30 the valves 41 may be turned on for the medium pressure mill water 36 and the medium pressure wash liquid source 38, and the valve 41 closed for high pressure wash water from the wash liquid source 38. To provide both medium and high pressure wash liquid, the valves 41 are turned on for both the high pressure output and the medium pressure output from the wash liquid source 38 and the valve 41 may be turned off to the medium pressure output of the mill water.

The number of nozzles 16, 18 in each row is dependent on the length of the drum. For example, a drum having a length of 10 feet (3m) may have five groups 24 of nozzles and a drum having a length of 12 feet (4m) may have six groups 24 of nozzles.

A "pass" is one lateral movement of the beam, e.g., back or forth two feet (0.6m), during which one group of nozzles (A, B, C, D, E or F) sprays wash liquid against the drum and the other nozzles are turned off. A complete wash cycle may include a sequential series of passes in which each of the medium pressure nozzle in each groups of nozzles sequentially direct medium pressure wash liquid to remove the precoat layer and one pass in which the high pressure nozzles (with the medium pressure nozzle) direct wash liquid to remove the lime mud cake and clean the underlying filter cloth.

One complete wash cycle may be a: (i) first pass in which the high pressure and low pressure nozzles (A_{N} and G_{N}) direct high and medium pressure streams of wash liquid against the lime cake and the solenoids (Aₛ and Gₛ) are opened, and the other solenoids are closed such that the other nozzles do not spay wash liquid; (ii) at the completion of the first pass, the solenoids (Aₛ and Gₛ) are closed and then at the start of the second pass medium pressure solenoid Bₛ is opened so that only medium pressure wash liquid sprays from the medium pressure nozzle B_{N}, and no other nozzle sprays wash liquid, (during the second pass, the beam and nozzles move in an opposite direction to the first pass); (iii) at the completion of the second pass solenoid Bₛ closes, an the medium pressure solenoid Cₛ opens at the start of the third pass so that only medium pressure wash liquid sprays from the medium pressure nozzle B_{N}; (iv) at the completion of the third pass solenoid Cₛ closes, the medium pressure solenoid Dₛ opens at the start of the fourth pass so that only medium pressure wash liquid sprays from the medium pressure nozzle C_{N}, and (v) the sequence of passes continues for solenoids and nozzles (Eₛ, Eₙ, and Fₛ, Fₙ) to complete the first wash cycle. After the completion of the first wash cycle, a second wash cycle commences which is the similar to the first wash cycle except that during the first pass medium and high pressure solenoids (Bₛ and Hₛ) are opened so that wash liquid streams from medium and high pressure nozzles (Bₙ and Hₙ) and the subsequent passes each have open one of the remaining medium pressure solenoids/nozzles. The wash cycles continue until each set of high pressure nozzles/solenoids has been opened to remove the lime cake and clean the filter cloth.

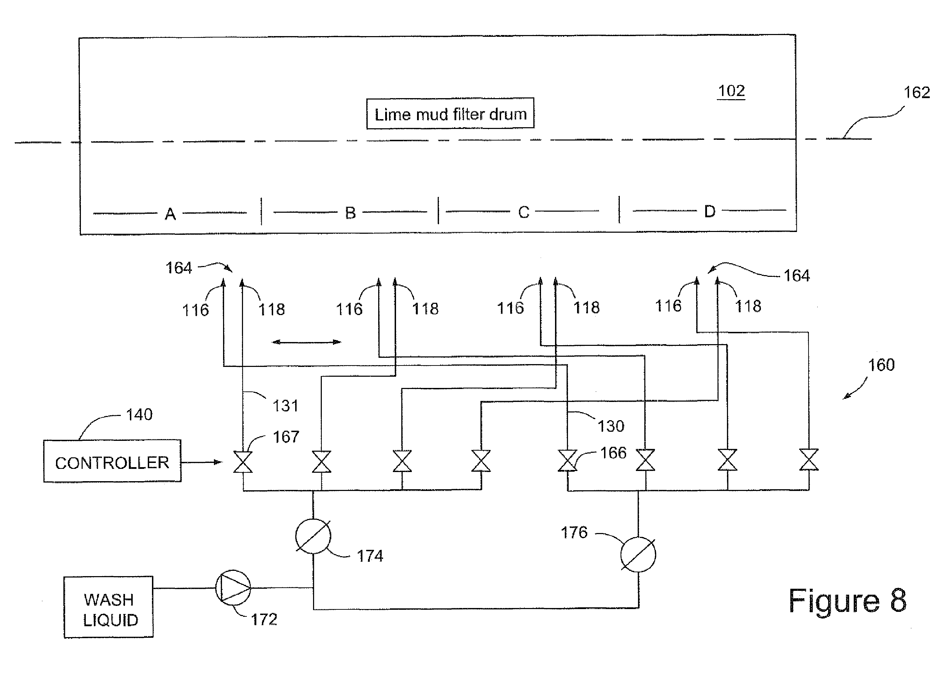

The solenoid valves and motor are operated by a controller (see 140 in Fig. 8), such as a computer, microprocessor, a programmable logic circuit (PLC) or a distributed control circuit (DSC). The motor may continually move the beam back and forth over a distance corresponding to the distance between the nozzles in the rows on the beam, e.g., two feet. Alternatively, the controller may cause the actuator to move the beam back in forth in predetermined cycles, such moving the beam back and forth in four cycles, wherein each cycle includes moving the beam in a backward stroke and a forward stroke. After completion of a wash cycle, the controller may or may not idle the wash system for a short predetermined period such as 20 minutes to an hour. After this idle period, the controller starts another wash cycle.

FIGURE 2 is a side view of the wash system 20 for the vacuum drum dryer. In one embodiment, the wash system 20 provides wash liquid to rows 16, 18 of nozzles directed at a lime cake 10 on the rotating drum 2. The wash systems 20 includes a beam 22 or other long frame that supports the rows of nozzles that deliver wash liquid to the drum and, particularly, the lime cake and the filter wire. The beam 22 is parallel and proximate to the drum. The beam may position the nozzles such that nozzles are close to the drum, such as within one to two inches (50 mm to 2 mm) of the drum.

The beam 22 moves reciprocally, e.g., back and forth, to move the nozzles in a back and forth, e.g., oscillating, movement across the face of the lime cake and drum. The distance that each nozzle moves back and forth is preferably equal to the distance between nozzles in each row. For example, the distance of the back and forth movement of the beam 22 is about two (2) feet (0.6 meter). Similarly, the distance between the nozzles in each row of nozzles is about two (2) feet, and may be an inch or two less than the distance of the back and forth movement of the beam.

The back and forth movement of the beam 22 moves the nozzles 16, 18 across an annular portion of the drum. As shown in Figure 2, the drum is divided (for purposes of illustration and not literally) into longitudinal annular ring sections (A, B, C, D, E, F and G) of the drum. The annular ring sections have a width corresponding to the back and forth movement, e.g., two feet, of the beam. Each ring section has an associated group 24 of nozzles 16, 18 arranged at a location along the length of the beam adjacent to the ring section. Each group of nozzles traverses the width of its corresponding ring section as the beam moves back and forth. For example, the group 24 of nozzles corresponding to ring section G on the drum is positioned to face ring section G and move back and forth across ring section G as the beam 22 moves back and forth. Similarly, the group 24 of nozzles adjacent ring section F moved back and forth across the portion of the drum corresponding to ring section F; the group 24 of nozzles adjacent ring section E move back and forth across the portion of the drum corresponding to ring section E, and so on. The groups 24 of nozzles are arranged such that collectively the nozzles traverse back and forth across the entire width of the lime cake and filter on the drum.

A group 24 of nozzles comprises, for example, a high pressure nozzle 16 (or pair of high pressure nozzles) and a medium pressure nozzle 18, wherein the nozzles 16, 18 are aligned vertically. The medium pressure nozzle 18 is above the high pressure nozzle(s) 16 for a clockwise rotating drum (but may be below the high pressure nozzles if the drum rotation is counter-clockwise). The medium pressure nozzle 18 is preferably a spray or fan nozzle discharging a wash liquid spray at a pressure of between two (2) bar to twenty (20). The medium pressure nozzle may discharge a spray of wash liquid that impinges on a 120 mm to 250 mm width strip of the lime cake on the drum. The medium pressure fan nozzle 18 removes an annular ring section of the precoat layer but does not remove the remainder of the lime cake. Removal of the precoat layer clears the fine dust particles that buildup in the precoat layer. If not periodically cleared, these fine dust particles may render the precoat layer impervious and prevent air flow through the lime cake and into the vacuum system. The ring of the precoat layer 17 is reformed on the cake as the drum rotates through the vat 11.

The medium pressure sprays may be applied to remove the precoat layer in successive rings while the scraper continues to remove dried portions of the precoat. The medium pressure nozzles 18 are preferably positioned immediately above the vat and adjacent the portion of the drum rising out of the vat. The scraper 14 is preferably positioned on the opposite side of the drum from the wash system and immediately above the vat. The precoat layer removed by the medium pressure nozzle forms a relatively narrow ring section depression in the lime cake. This depression continues as the drum rotates to the scraper. As the drum rotates to the scraper, the precoat layer is dried. The scraper removes the precoat. The depression in the lime cake formed by the medium pressure nozzle may pass under the scraper without touching the scraper. As the depression is immersed in the vat of lime mud, the depression fills with lime mud and reforms the precoat layer. As the drum continues to rotate, the filled in portion of the precoat is preferably not immediately washed again with the nozzles, but is rather dried and then cut by the scraper. The filled in portion of the precoat is preferably not again washed until the remainder of the drum receives medium pressure sprays from the wash system.

Each group of nozzles 24 also preferably includes one or a pair of high pressure nozzles that each discharge a jet of wash liquid at a high pressure of preferably between thirty (30) bar to seventy (70) bar. The high pressure nozzles direct a narrow jet of wash liquid that cut away the lime cake and exposes a narrow strip of the underling filter. The jet also cleans the exposed filter. Preferably, a first high pressure nozzle cuts away a narrow strip of the lime cake and the second, and higher, high pressure nozzle cleans the exposed filter. In addition, the medium pressure nozzle immediately above the high pressure nozzles sprays wash liquid on the exposed filter and adjacent lime cake. The medium pressure spray causes lime mud to fill the strip cut by the high pressure nozzles. Filling the strip with lime mud prevents excessive air flow through the strip and exposed filter and thereby prevents a loss of suction in the drum. The high pressure jets are applied less often to the drum than are applied the medium pressure sprays when applied without the high pressure jets.

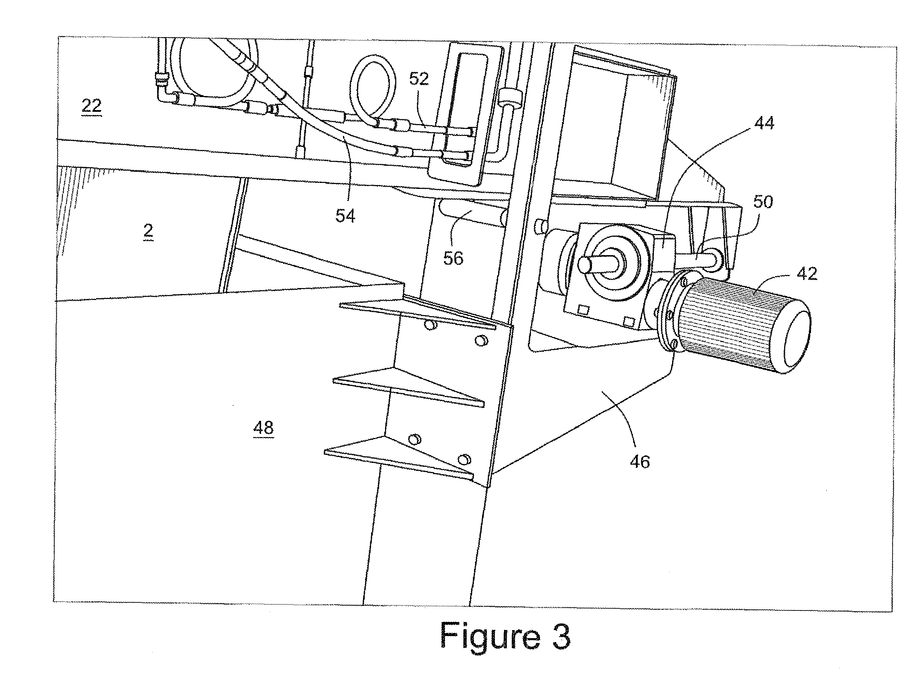

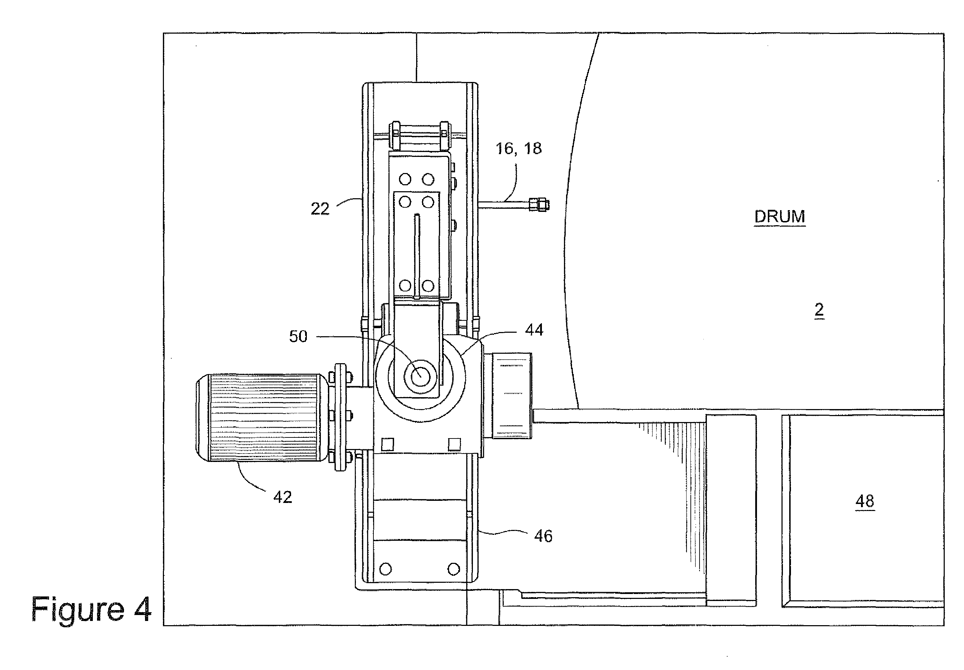

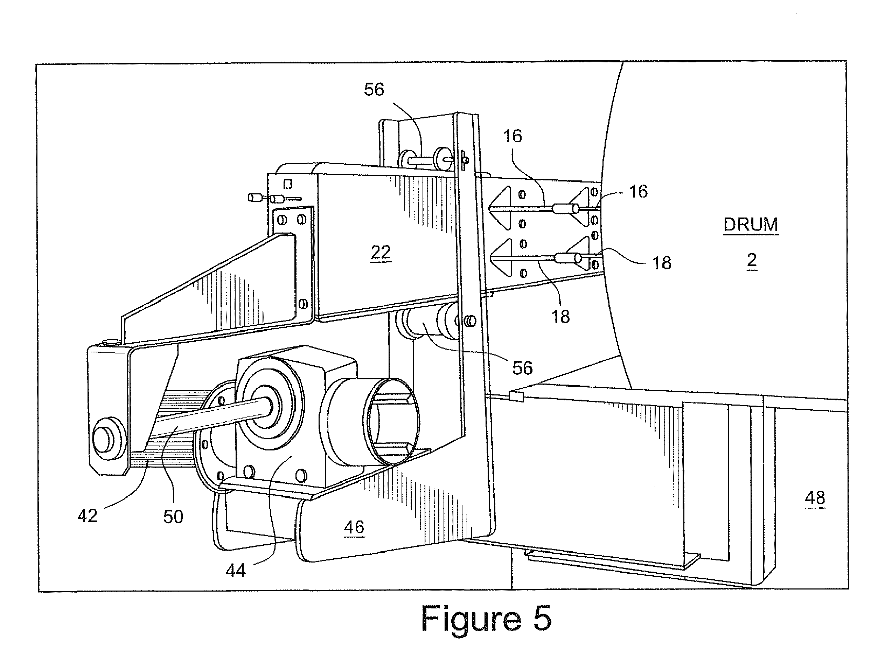

FIGURE 3 is a perspective view of a front side of an exemplary motor 42 and gearbox 44 assembly attached to a bracket 46 affixed to a side of the hood 48 that encloses the drum 2 of the lime mud dryer. FIGURE 4 is an end view of the beam with the motor and gear assembly shown in Figure 3. FIGURE 5 is a perspective view of a rear side of the motor 42 and gearbox 44 and the reciprocating beam 22 shown in Figure 3.

The motor 42 and gearbox 44 engage a shaft 50 attached to the beam 22 that supports the nozzles 16, 18 (Figs. 1 and 2) each coupled to one of the high and low pressure tubes 52, 54. reciprocating beam supporting nozzles for the wash system. The motor 42 turns gearing in the bear box to advance and retract the shaft 50 and thereby reciprocally move the beam 22. The motor is actuated by a controller 140 (see Fig. 8).

The beam 22 is supported by a stationary bearing structure 56 which may included sliding surfaces and rollers to support the beam at opposite sides of the drum and at certain locations along the length of the beam. The bearing structure 56 is preferably attached to a hood 48 and allows the beam to move back and forth as the nozzles sweep back and forth across the drum. The bearing structure also holds the beam such that the nozzles are a fixed distance from the drum. Further, the bearing structure may allow the beam to turn to provide access to the nozzles for repair and replacement.

The beam 22 may be a stainless steel beam, such as a beam having a C-shaped cross section, or a beam or pipe having an internal passage for the tubes 52, 54 to direct wash liquid to the rows of nozzles 16, 18. The tubes may be stainless steel tubes or plastic flexible tubes fixed to mountings on the beam. Each tube 52, 54 preferably has one outlet is connected to one of the nozzles. The tubes 52, 54 provide a fluid flow passage between the nozzle and the solenoid valve corresponding to the nozzle.

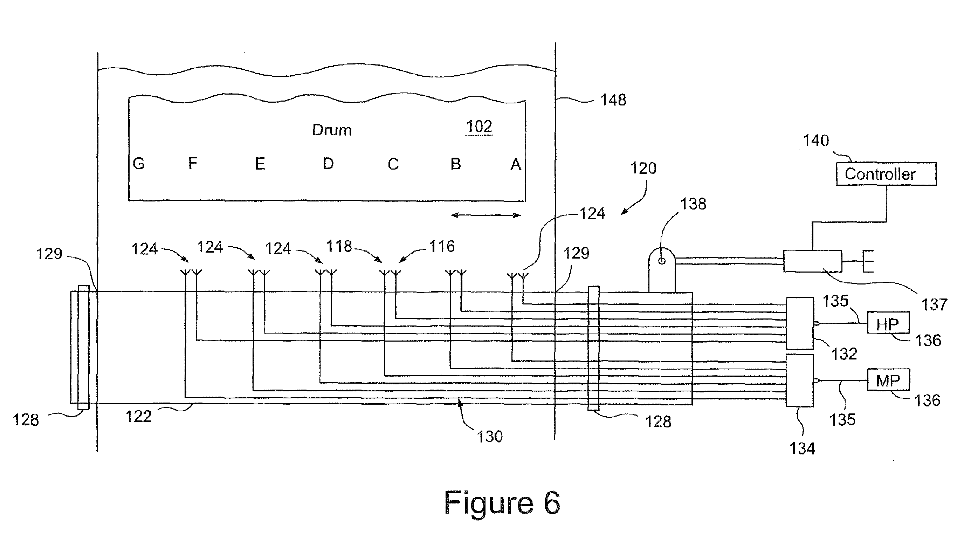

FIGURE 6 is an schematic diagram view of an alternative spray wash system 120 having rotary valves 132, 134 to direct high pressure and medium pressure wash liquid from common source conduits 135 and sources of high pressure (HP) and medium pressure (MP) sources of wash liquid 136. The rotary valves provide the same sequential wash flow distribution to the tubes 130 for each of the nozzles 116, 118 extending through the beam 122 and to the valves that may be mounted to an end of the beam or to a bracket adjacent an end of the beam.

The beam 122 is supported on bearing assemblies 128 at opposite sides of the housing 148 of the drum dryer. Seals 129 may be provided between the housing 148 and the beam 122. A motor and gearbox assembly 137 is connected to the beam and reciprocally moves the beam. A controller 140 actuates the motor to control the reciprocal motion of the beam and controls the operation of the rotating valves 132, 134 to sequentially direct wash liquid to each of the tubes 130 leading to the nozzles 116, 118.

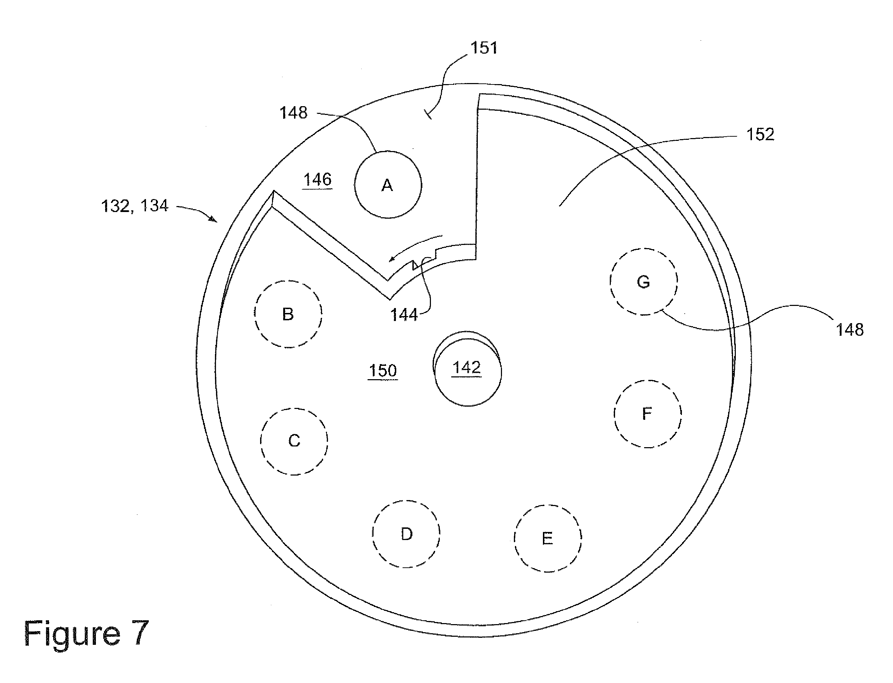

FIGURE 7 is a perspective view of components of the rotating valves 132, 134, and particularly a rotating disc 150 and a stationary disc 151. The rotating and stationary disc are arranged in a flow conduit of the rotating valve and are mounted in a closed annular chamber. Wash liquid flows into a center inlet 142, through a radial passage 144 and to a slot 146 in the rotating disc. The rotating disc faces upstream of the flow and the stationary disc includes openings 148 each connected to one of the flow conduits 130 in the beam leading to the nozzles for one of annular zones A, B, C, D, E, F and G, as shown in Figure 6. The slot 146 in the rotating disc opens to one of the openings 148 (A) of the tubes 130 to direct wash fluid to the nozzles. The rotating disc closes the inlets to the other openings (B through G) to the tubes 130. As the disc 150 rotates about the center inlet 142, wash flow is sequentially directed to each of the openings 148 (A to G).

The stationary disc 151 may have a closed position 152, which when aligned with the slot 146 in the rotating disc, results in closure of all of the openings to the tubes 130 so that no wash liquid flows to any of the tubes 130 in the group of conduits connected to the rotating valve.

FIGURE 8 is a schematic diagram illustrating the operation of an exemplary controller 140 for the valves 166, e.g., solenoid valves, that direct wash liquid to medium pressure nozzles 116 and high pressure nozzles 118. As the groups 164 of nozzles are moved and forth, the controller 140 operates the valves 166, 167 to select the nozzle(s) to discharge wash liquid to the lime cake on the drum 102. The controller may also actuates the motor (42 in Figs. 3 to 5) that moves the beam back and forth. The controller may be programmed with an algorithm that determines a schedule for selecting the groups 164 of nozzles and the nozzles 116, 118 within the selected group. A first valve 176, e.g., a restriction valve, is opened to allow wash liquid under medium pressure, for example, 300 pounds per square inch (psi) to 650 psi (20 bar to 45 bar), to flow to the solenoid valves 166 coupled to the tubes 130 leading to the medium pressure nozzles 116. A second valve 174 is opened to allow wash liquid under high pressure, 800 psi to 950 psi (55 bar to 65 bar), to flow to the solenoid valves 167 coupled to the tube 131 leading to the high pressure nozzles 118. Pressure reducers may be provided with the valves 166, 167 to regulate the pressure of the wash liquid. A source of wash liquid is coupled to a high pressure liquid pump 172 that provides wash liquid to the valves and pressure reducers 166, 167 at a pressure above the pressure level needed for the high level pressure nozzles.

Preferably, the groups 164 of nozzles are scheduled to sequentially discharge wash liquid on the lime cake. In addition, the controller schedules when to apply medium pressure wash liquid alone and when to apply a combination of high pressure wash liquid jets and a medium pressure wash. For example, the controller may schedule the medium pressure nozzles in each group (A to F in Fig. 2, A to G in Fig. 6 or A to D in Fig. 9) to sequentially discharge a spray to incrementally remove the precoat layer. Each medium pressure nozzle may discharge wash liquid during a single stroke (backwards or forward) of the beam 22. Before or after all of the medium pressure nozzles have discharged wash liquid to thereby entirely remove the precoat and allow a new precoat to form, the controller may schedule the pair of high pressure nozzles in one group (one of A to F in Fig, 2, A to G in Fig. 6, and one of A to D in Fig. 8) to cut through and remove the lime cake and clean the exposed filter on the drum ring section corresponding to the selected high pressure nozzles, The selected group of high pressure nozzles is sequentially selected after each cycle of entirely removing and replacing the precoat layer. A minor variation to this process is to skip the precoat removal step for the drum ring about to have the cake removed, as being unnecessary in view of the imminent removal of the cake which will also remove the precoat layer.

Between each successive pass in which the lime cake is removed from an individual drum ring section, the precoat layer is removed (or entirely removed except for the ring section about to have its cake removed). The next drum ring section has its cake removed and filter cleaned after the entire precoat layer has been removed and replaced. The cake is removed at a slower rate than the precoat layer and the cake is removed intermittently and in ring sections.

The precoat layer may be continually being removed from at least one drum ring section. At the same time that the precoat layer is being removed, the scraper may be continually removing a portion of the thickened precoat layer and discharging the removed portion to a kiln. In addition, the scraper may continue to remove a portion of the thickened precoat layer while the lime cake is being removed at an intermittent rate of one ring section at a time.

In contrast to the operation of the scraper and the medium pressure spray nozzles, the high pressure nozzles may be inactive for much of the period of the drum rotation. When the high pressure nozzles are active, a single pair of nozzles are active to remove the lime cake from only one ring section of the drum. After a ring section has had its lime cake removed and filter cleaned, the high pressure nozzles remain off while the precoat layer is removed and replaced. During the period the high pressure nozzles are off, the lime cake is reestablished on the last drum ring section that received the cake removing jets from the high pressure nozzles. At no one time is the entire lime cake removed from the drum. At all times, a large majority, e.g., 80 percent to 86 percent, of the lime cake remains on the drum. Because such a large majority of the lime cake remains on the drum, the scraper can continue to remove dried lime mud from the precoat layer while high pressure nozzles are removing a ring section of the lime cake.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A method of cleaning a drum of a vacuum dryer, wherein the drum has a circumferential surface including a filter covered by a cake of a material to be dried and a network of conduits which receive filtrate passing through the cake and filter, a vat of the material in which the drum is partially seated, a mechanical scraper adjacent a first side of the drum and a wash structure including at least one row of nozzles adjacent a second side of the drum, the method comprising:
rotating the drum about an axis in a first direction to form the cake of the material on the circumferential surface as the drum moves through the vat, wherein an outer layer of the cake is a precoat layer formed from the material in the vat;
drawing filtrate through the cake and filter and into the network of conduits, wherein the precoat layer thickens as the filtrate is removed;
mechanically scraping at least a portion of the precoat layer from the cake by the scraper, wherein the first side of the drum rotates down towards the vat; and
discharging a wash liquid from a row of nozzles of the wash structure to the second side of the drum, wherein the wash liquid is discharged in a sequence in which one of the nozzles in the row is discharging the wash liquid while other nozzles in the row are not applying the wash liquid to the drum.

2. The method in claim 1 wherein the wash structure moves reciprocally and parallel to the axis of the drum while discharging the wash liquid.

3. The method in claim 2 wherein the reciprocal movement of the wash structure is at least a distance equal to a gap between the nozzles in the row, and the wash structure moves the distance while each one of the nozzles in the row discharges the wash liquid.

4. The method in any of claim 1 wherein the row of nozzles includes at least one row of high pressure jet nozzles and a second row of medium pressure spray nozzles, wherein each high pressure jet nozzle is aligned in a direction transverse to the drum axis with one of the medium pressure spray nozzles.

5. The method in claim 4 wherein the sequence includes substantially continuously discharging wash liquid from at least one nozzle in the row of the medium pressure spray nozzles, and cycling between discharging wash liquid from one of the high pressure jet nozzles to remove a portion of the cake and removing the entire precoat layer by the wash liquid discharged from the row of the medium pressure spay nozzles.

6. The method in any one of the preceding claims, wherein the wash liquid is discharged while the portion of the precoat layer is mechanically scraped from the cake.

7. The method in any one of the preceding claims, wherein solenoid valves direct wash liquid to the one of the nozzles in the row discharging the wash liquid and blocks wash liquid from the other nozzles.

8. The method in any one of the preceding claims 1 to 6, wherein a rotary valve directs wash liquid to the one of the nozzles in the row discharging the wash liquid and blocks wash liquid from the other nozzles, wherein the rotary valve turns to apply the wash liquid to the nozzles in the sequence.

9. The method in claim 1 wherein the row of nozzles include at least one row of high pressure nozzles which apply high pressure jets to periodically remove a ring section of the cake from the drum and the scraper continues to remove the precoat layer during application of the high pressure jets.

10. The method in any one of the preceding claims, wherein the material is lime mud, the cake is a lime cake and the scraper removes thickened lime mud in the precoat layer.

11. A vacuum dryer comprising:
a rotable drum including a circumferential surface covered by a filter and a cake of a material to be dried;
a network of conduits which receive filtrate passing through the cake and filter;
a vat of the material in which the drum is partially seated;
a mechanical scraper adjacent a first side of the drum, and
a wash structure including nozzles adjacent a second side of the drum and the nozzles are arranged laterally across the surface of the drum;
a controller actuating at least one valve to select one or more of the nozzles to discharge a fluid against cake while the scraper removes an outer layer of the cake.

12. The vacuum dryer as in claim 11 wherein the nozzles include high pressure nozzles vertically aligned with medium pressure nozzles.

13. The vacuum dryer as in claim 11 or 12, wherein the controller selects the one or more nozzles in sequence that results in an entire surface of the cake on the drum receiving the fluid from one or more of the nozzles.

14. The vacuum dryer as in claim 11, 12 or 13, wherein the controller actuates a motor which reciprocally drives a beam supporting the nozzles.
